# FASCICULE DE BREVET EUROPEEN

(11) **EP 0 390 689 B1**
(45) Date de publication et mention de la délivrance du brevet: **26.10.1994**
(21) Numéro de dépôt: 90400860.4
(22) Date de dépôt: 29.03.1990
(51) Int. Cl.: B26D 7/26

(54) **Appareil de découpage rotatif**
Rotierende Schneidvorrichtung
Rotating cutter apparatus

(30) Priorité: 30.03.1989 FR 8904153
(43) Date de publication de la demande: 03.10.1990
(73) Titulaire: USINAGE MONTAGE ET ASSISTANCE TECHNIQUE U.M.A.T., F-45160 Olivet (FR)
(72) Inventeur: Kakko-Chiloff,Nicolas, F-45160 Olivet (FR)
(74) Mandataire: Madeuf, René Louis

(56) Documents cités:
- EP-A- 0 234 559
- EP-A- 0 244 492
- US-A- 4 226 150
- US-A- 4 759 247

## Description

La présente invention concerne un appareil de découpage rotatif utilisable plus particulièrement dans les lignes d'impression et de façonnage de boîtes pliantes en carton et d'étiquettes auto-adhésives.

Ces appareils sont généralement basés sur le principe du roulement, l'un sur l'autre, de deux cylindres de coupe superposés, d'axes parallèles, dont l'un est gravé en relief et l'autre est lisse. Toutefois, dans certains procédés, les deux cylindres peuvent comporter des gravures complémentaires. L'entraînement en rotation des deux cylindres, à la même vitesse périphérique mais en sens inverse l'un de l'autre, est assuré par des engrenages de liaison d'un même diamètre primitif choisi de manière qu'il subsiste, entre les deux cylindres de coupe, une faible distance constante nécessaire pour assurer une bonne coupe de la nappe de carton ou de papier passant entre eux, sans qu'il y ait pour autant un contact entre les parties métalliques assurant la coupe.

L'intervalle, qui sépare les deux cylindres de coupe d'axes parallèles, est assuré par des galets de roulement qui sont fixés aux extrémités des deux cylindres en étant parfaitement concentriques avec ceux-ci. Le diamètre de chacun de ces galets de roulement est égal au diamètre primitif de l'engrenage de liaison. La pression de coupe peut être alors appliquée sans réserve sur les deux cylindres.

Le diamètre des cylindres de coupe qui dépend du format découpé, doit être également déterminé, en fonction de la laize, de telle façon que les flexions mises en oeuvre lors de la coupe, ajoutées aux tolérances d'exécution, ne soient pas supérieures à la distance théorique qui sépare les parties coupantes. Les flexions, qui apparaissent lors de l'opération de coupe, ont deux origines à savoir la flexion proprement dite des cylindres sous l'effet d'une charge ponctuelle ou uniformément répartie, due à l'effort de coupe, et la flexion causée par les moments fléchissant dus à l'effort exercé sur les fusées des cylindres. La première flexion ne peut être atténuée que par l'augmentation du diamètre des cylindres de coupe. La seconde flexion peut être totalement éliminée en exerçant la pression de coupe directement sur les galets de roulement. Cette pression est généralement appliquée au moyen de deux arbres de grand diamètre, d'axes parallèles aux axes des cylindres de coupe et disposés respectivement au-dessus et en dessous de ces deux cylindres. Ces arbres dont la rotation peut être libre, sont solidaires de galets de roulement qui sont montés en opposition par rapport aux galets de roulement des cylindres de coupe et qui roulent sur ceux-ci. La pression nécessaire à la coupe est alors appliquée sur les fusées des deux arbres et cette pression est transmise aux cylindres de coupe par l'intermédiaire des galets de roulements en contact les uns avec les autres, donc sans passer par les fusées des cylindres de coupe, ce qui évite la déformation qui en résulterait.

Un tel appareil de découpage connu présente à l'évidence l'inconvénient d'avoir une structure particulièrement complexe et onéreuse. Un autre inconvénient que présente un tel appareil de découpage connu est associé à l'opération de changement de format. En effet lors d'une telle opération il est nécessaire de conserver un même niveau au plan de la nappe de carton ou de papier à découper, afin de ne pas rendre compliquée la mise en oeuvre des opérations suivantes. Il faut donc assurer, à chaque changement de format, l'engrènement correct des engrenages de liaison, dont la position varie, avec l'engrenage de commande. Cet engrènement peut être obtenu au moyen d'une "tête de cheval" qu'il faut décaler puis recaler lors du changement de format. Pour faciliter cette opération la "tête de cheval" peut être équipée d'un vérin pneumatique et les engrenages de galets de roulement.

Toutes ces considérations conduisent, dans le but de réduire les temps morts de calage, à fournir, pour chaque nouveau format, un dispositif de découpage interchangeable complet comportant, outre les cylindres de coupe au format, tous les autres éléments nécessaires au fonctionnement du découpage. Autrement dit lors de chaque changement de format on remplace le dispositif de découpage proprement dit, correspondant au format précédent, par un nouveau dispositif de découpage correspondant au nouveau format, seule la commande restant sur le banc de la machine. Cette opération entraîne une manutention lourde et compliquée et rend le coût des outillages de format très élevé.

La présente invention vise à remédier à ces inconvénients.

La technique antérieure a notamment fait connaître les documents EP-A-0 234 559 et US-A-4 759 247.

Ainsi, le document EP-A-0 234 559 décrit une disposition dans laquelle on prévoit d'ouvrir transversalement le cadre de support en deux de sorte que les cylindres sont accessibles et peuvent être enlevés l'un indépendamment de l'autre. Dans cette réalisation, cependant, les ressorts montés entre les blocs de support des cylindres inférieur et supérieur sont des ressorts de pression et ne sont pas susceptibles de solidariser le cylindre inférieur au cylindre supérieur quand ils sont sortis du cadre.

On voit ainsi que la disposition antérieure utilise des ressorts pour écarter les deux blocs de support des cylindres mais aucun moyen pour limiter l'écartement de ces blocs et les lier entre eux. Une telle réalisation nécessite donc un démontage cylindre par cylindre et interdit un stockage groupé sous forme de cassette. Une telle particularité de stockage groupé sous forme de cassette ne se retrouve pas non plus dans le document US-A-4 759 247.

Dans la présente invention, au contraire, les deux paires de blocs de support des cylindres constituent avec ces derniers une cassette amovible verticalement et démontable en une seule pièce par des ouvertures ménagées respectivement dans les parties supérieures des deux montants du bâti de l'appareil de découpage et débouchant dans les faces supérieures de ces montants.

On prévoit, en outre, des moyens limitant le mouvement relatif vers le haut d'un bloc par rapport à l'autre, sous l'action du ressort qui fait partie du dispositif d'accouplement.

L'invention est ainsi bien énoncée à la revendication 1 annexée.

On décrira ci-après, à titre d'exemple une forme d'exécution de la présente invention, en référence au dessin annexé sur lequel :
La figure 1 est une vue en coupe verticale et longitudinale d'un appareil de découpage rotatif suivant l'invention.

La figure 2 est une vue en coupe verticale et transversale faite suivant la ligne II-II de la figure 1.

La figure 3 est une vue en plan du cadre supérieur de mise en pression de l'appareil de découpage.

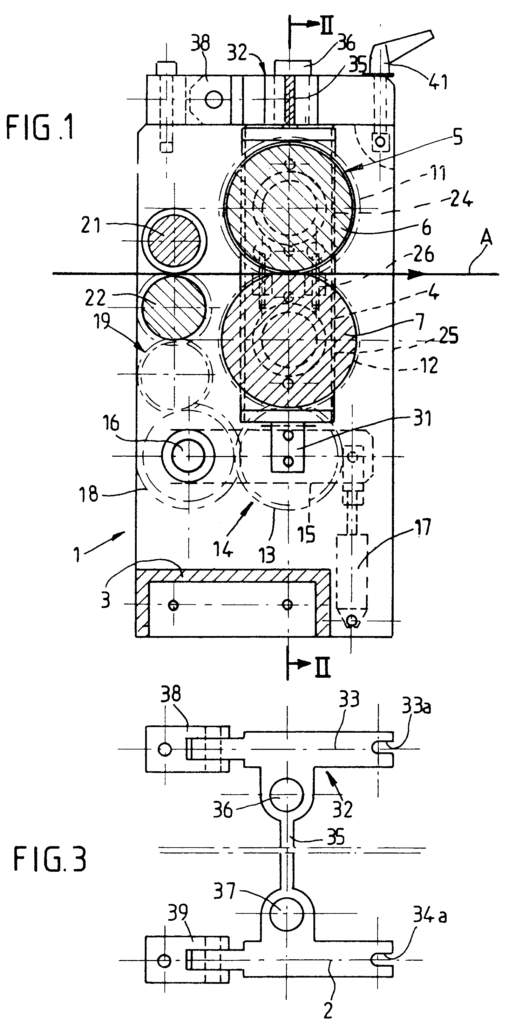

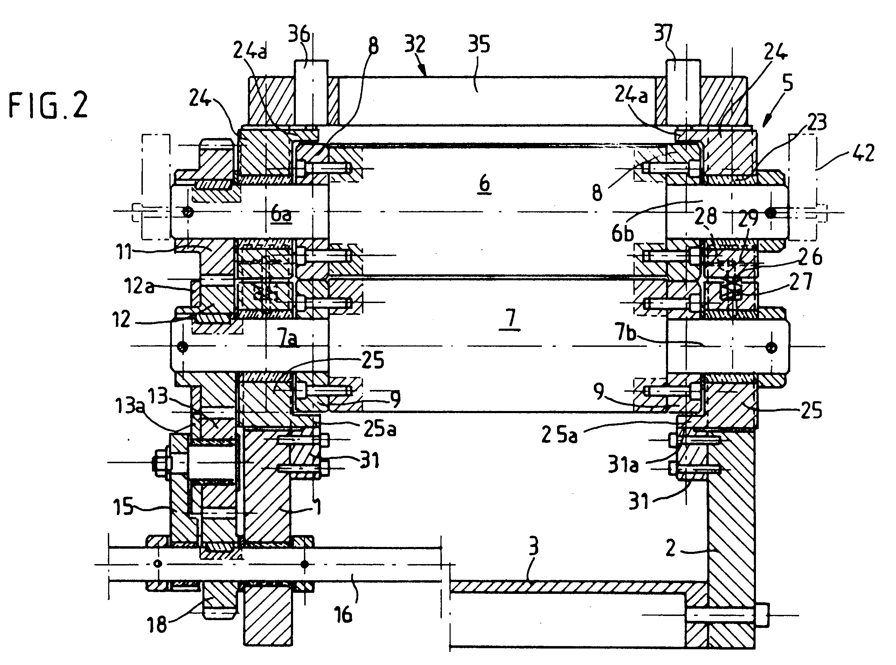

L'appareil de découpage rotatif représenté sur les figures 1 à 3 comprend un bâti constitué de deux montants verticaux parallèles 1, 2 reliés entre eux, par des traverses et notamment par une traverse horizontale inférieure 3. Chacun des montants 1, 2 est entaillé, dans sa partie supérieure, d'une ouverture 4 s'étendant verticalement, de forme rectangulaire et débouchant dans la face horizontale supérieure du montant. Dans les deux ouvertures opposées 4 est engagé un dispositif de découpage interchangeable 5, constitué par une "cassette" simplifiée amovible. Cette cassette 5 comprend essentiellement deux cylindres de coupe supérieur 6 et inférieur 7, d'axes horizontaux et transversaux, entre lesquels passe une nappe de papier ou carton A à découper, défilant horizontalement dans le sens longitudinal. Le cylindre de découpage supérieur 6 est solidaire, à ses deux extrémités, de deux fusées coaxiales 6a, 6b et de deux galets de roulement supérieurs 8 fixés respectivement aux deux faces frontales du cylindre 6, au moyen de vis, et de la même façon le cylindre de coupe inférieur 7 est solidaire, à ses deux extrémités, de deux fusées coaxiales 7a, 7b et de deux galets de roulement inférieurs 9 fixés respectivement aux deux faces frontales du cylindre 7, au moyen de vis. Les galets de roulement supérieurs 8 et inférieurs 9 qui roulent les uns sur les autres, ont un même diamètre qui est légèrement supérieur à celui des cylindres de coupe 6, 7, de manière à maintenir entre ces deux cylindres un faible intervalle nécessaire pour assurer une bonne coupe de la nappe de carton ou de papier passant entre eux, sans qu'il y ait pour autant un contact entre les parties métalliques assurant la coupe. Le diamètre des galets de roulement 8, 9 est égal au diamètre primitif d'engrenages de liaison 11, 12, solidaires respectivement des fusées gauches 6a, 7a (sur la figure 2) des cylindres de coupe 6, 7, à l'extérieur du montant gauche 1. Ces engrenages de liaison 11, 12 sont en prise l'un avec l'autre et l'engrenage inférieur 12 est lui-même en prise avec un engrenage 13 faisant partie d'une "tête de cheval" 14 et dont l'arc de débattement, dans un plan vertical longitudinal, est sensiblement aligné avec l'axe de coulissement vertical de la cassette 5. Les engrenages 12, 13 sont respectivement solidaires de galets de roulement 12a, 13a venant en contact l'un avec l'autre lorsque les engrenages 12, 13 sont en prise. La "tête de cheval" 14 comprend un levier horizontal 15 portant l'engrenage 13 situé sous l'engrenage 12, qui est articulé, à une extrémité, autour d'un arbre transversal de commande générale ou d'entraînement 16 et dont l'autre extrémité est accouplée à l'extrémité supérieure de la tige d'un vérin vertical inférieur 17, par exemple du type pneumatique. Le levier 15 peut ainsi pivoter autour de l'axe de l'arbre 16, en entraînant avec lui l'engrenage de liaison 13. Cet engrenage de liaison 13 est en prise avec un engrenage menant 18 solidaire de l'arbre d'entraînement 16. Cet engrenage 18 est aussi relié, par l'intermédiaire d'un train d'engrenages 19, à une paire de cylindres d'appel supérieur 21 et inférieur 22 entre lesquels passe la nappe de papier ou de carton A à l'entrée de l'appareil de découpage.

Les fusées 6a, 6b et 7a, 7b des cylindres de coupe 6, 7 sont respectivement engagées, par l'intermédiaire de roulements 23, dans des blocs superposés supérieurs 24 et inférieurs 25 engagés étroitement dans les ouvertures 4 et pouvant coulisser verticalement dans celles-ci. Ces blocs coulissants 24, 25 ont une même forme parallélépipédique et ils ont la même dimension extérieure quel que soit le format des cylindres de coupe 6, 7. Les deux blocs supérieur 24 et inférieur 25 qui sont superposés l'un à l'autre dans une même ouverture latérale 4, sont reliés l'un à l'autre par un dispositif d'accouplement élastique 26 disposé entre eux. Ce dispositif d'accouplement 26 comporte un ressort 27, constitué par exemple par des rondelles Belleville, qui est interposé entre les deux blocs 24 et 25 de manière à soulever quelque peu le bloc supérieur 24 et le cylindre de coupe supérieur 6 par rapport au bloc inférieur 25, lorsque les deux blocs 24, 25 sont libres. Chaque dispositif d'accouplement 26 comporte par ailleurs un goujon vertical 28 fixé à la partie supérieure du bloc inférieur 25, traversant un trou percé dans la partie inférieure du bloc supérieur 24 et qui est traversé, à son extrémité supérieure, par une goupille horizontale 29. Cette goupille 29 constitue une butée limitant le mouvement relatif vers le haut du bloc supérieur 24, sous l'action du ressort 27, par rapport au bloc inférieur 25.

Chaque bloc coulissant supérieur 24 est prolongé vers l'intérieur de l'appareil, à sa partie supérieure, par une partie en porte-à-faux 24a s'étendant au-dessus d'un galet de roulement supérieur 8. De la même façon chaque bloc coulissant inférieur 25 est prolongé vers l'intérieur, à sa partie inférieure, par une partie en porte-à-faux 25a qui s'étend en dessous d'un galet de roulement inférieur 9 et au-dessus d'une butée rapportée fixe 31. Cette butée 31 est fixée, au moyen de vis, sur la face interne du montant correspondant 1, 2 de manière que sa face horizontale supérieure 31a soit située à un niveau légèrement supérieur à celui où se trouve le bord inférieur 4a de l'ouverture 4. De ce fait la partie interne en porte-à-faux 25a du bloc coulissant inférieur 25 est normalement en appui sur la face supérieure 31a de la butée rapportée 31 et la face inférieure du bloc coulissant inférieur 25 est légèrement écartée du bord inférieur 4a de l'ouverture 4.

L'appareil de découpage rotatif suivant l'invention comporte, à sa partie supérieure, un cadre de mise en pression 32 qui présente sensiblement, vu en plan, la forme d'un H, comme on peut le voir sur la figure 3. Ce cadre de mise en pression 32 comprend deux branches latérales 33, 34, s'étendant dans le sens longitudinal, lesquelles sont reliées par une traverse centrale 35. Cette traverse 35 porte, à ses extrémités qui sont reliées aux deux branches latérales 33, 34 et qui ont une plus grande largeur que le reste de la traverse 35, deux vérins verticaux de mise en pression 36, 37 dont les tiges s'étendent vers le bas, les extrémités inférieures de ces tiges étant situées juste au-dessus des parties en porte-à-faux 24a des blocs coulissants supérieurs 24 et en contact avec celles-ci. Le cadre de mise en pression 32 est articulé dans son ensemble, d'un côté, autour d'un axe transversal et à cet effet les branches latérales 33, 34 sont montées à pivotement, à l'une de leurs extrémités, sur des chapes respectives 38, 39 portées par les parties supérieures des deux montants 1, 2. A leurs extrémités opposées les branches latérales 33, 34 présentent des encoches respectives 33a, 34a, destinées à recevoir des leviers de blocage 41 montés à pivotement, autour d'axes transversaux, sur les parties supérieures des deux montants 1, 2.

Lorsque l'appareil de découpage rotatif suivant l'invention est calé en pression, comme il est représenté en trait plein sur les figures 1 et 2, le cadre de mise en pression 32 s'étend horizontalement et il est bloqué sur les faces supérieures horizontales des deux montants 1, 2, au moyen des deux leviers de blocage 41. Dans cette position, lorsque les deux vérins 36, 37, sont mis en pression, leurs tiges sont repoussées vers le bas et les deux blocs coulissants supérieurs 24 (et le cylindre de coupe supérieur) sont repoussés vers le bas, en provoquant l'écrasement des ressorts 27. La pression de chacun des vérins 36, 37 s'exerce dans le plan vertical et longitudinal passant par l'axe du vérin correspondant 36, 37 et par conséquent sensiblement dans le plan médian des galets de roulement superposés 8, 9. A la partie inférieure cette pression est encaissée par la butée fixe rapportée 31. De ce fait le moment fléchissant s'exerçant normalement sur chacune des fusées 6a, 6b, 7a, 7b des cylindres 6, 7 est annulé. Par ailleurs, la "tête de cheval" 14, sous l'action de la pression souple du vérin pneumatique 17, est soulevée et l'engrenage 13 porté par le levier 15 est en prise avec l'engrenage de liaison inférieur 12, de manière à assurer la transmission du mouvement de rotation entre l'arbre d'entraînement 16 et les deux cylindres de coupe 6, 7.

Lors d'une opération de changement de format, qui est très simple à réaliser, on ouvre tout d'abord le cadre de mise en pression 32. Pour cela, après avoir débloqué et escamoté les leviers 41, on fait pivoter le cadre de mise en pression 32 dans le sens inverse des aiguilles d'une montre (sur la figure 1) autour de l'axe transversal défini par les deux chapes 38, 39, pour l'amener en position sensiblement verticale. On procède ensuite à l'enlèvement de la cassette 5 précédemment utilisée en soulevant, au moyen d'un palan 42, représenté en traits mixtes sur la figure 2, le cylindre de coupe supérieur 6. Lors du soulèvement de ce cylindre de coupe supérieur 6, celui-ci se déplace d'abord seul, sur une courte distance, puis il entraîne avec lui le cylindre de coupe inférieur 7, par l'intermédiaire des dispositifs d'accouplement élastiques 26 qui présentent les moyens mentionnés précédemment limitant le mouvement relatif vers le haut du bloc supérieure 24 par rapport au bloc inférieur 25. La cassette 5 peut être ainsi extraite totalement des deux ouvertures 4 des montants 1, 2 et être ensuite remplacée par une nouvelle cassette 5 comportant deux cylindres de coupe 6, 7 ayant un diamètre différent correspondant au nouveau format.

Lorsque la cassette 5 est extraite des ouvertures 4, la "tête de cheval" 14 pivote d'elle-même vers le haut, dans le sens inverse des aiguilles d'une montre sur la figure 1, sous l'effet de la pression "souple" du vérin pneumatique 17. De ce fait l'engrenage 13 se trouve légèrement soulevé au-dessus de la position qu'il occupe normalement pendant le fonctionnement de l'appareil de découpage. Par conséquent, en fin de descente de la nouvelle cassette 5, l'engrenage de liaison inférieur 12 de cette cassette vient automatiquement en prise avec l'engrenage 13 et il repousse ensuite celui-ci vers le bas en faisant pivoter la "tête de cheval" 14 dans le sens des aiguilles d'une montre, à l'encontre de la pression "souple" du vérin 17. La "tête de cheval" 14 prend ainsi automatiquement sa position d'engrènement, grâce aux galets de roulement 12a, 13a des engrenages 12, 13 venant en contact l'un avec l'autre. La pression du vérin pneumatique 17 est préalablement réglée à une valeur telle que, sous l'effet du poids de la cassette 5 s'exerçant sur l'engrenage 13, la "tête de cheval" 14 puisse pivoter automatiquement vers le bas. Une fois la nouvelle cassette 5 mise en place, on rabat le cadre de mise en pression 32 en position horizontale, on l'immobilise au moyen des leviers de blocage 41 et on met en pression les vérins 36, 37, afin d'appliquer la pression de coupe désirée.

## Revendications

1. Appareil de découpage rotatif comportant un bâti supportant, entre deux montants verticaux parallèles (1, 2), deux cylindres de coupe superposés (6, 7), d'axes parallèles, à savoir un cylindre de coupe supérieur (6) et un cylindre de coupe inférieur (7), deux paires de blocs (24, 25) pouvant coulisser verticalement dans deux ouvertures rectangulaires (4) ménagées respectivement dans les deux montants (1, 2), à savoir deux blocs supérieurs opposés (24) dans lesquels sont respectivement montées à rotation deux fusées coaxiales opposées (6a, 6b) du cylindre de coupe supérieur (6) et deux blocs coulissants inférieurs opposés (25) dans lesquels sont respectivement montées à rotation deux fusées coaxiales opposées (7a, 7b) du cylindre de coupe inférieur (7), les blocs coulissants supérieur (24) et inférieur (25) étant reliés l'un à l'autre par un dispositif d'accouplement élastique (26) tendant à soulever le bloc coulissant supérieur (24) par rapport au bloc coulissant inférieur (25) et autorisant une course verticale limitée du bloc coulissant supérieur (24) par rapport au bloc coulissant inférieur (25), caractérisé en ce que les deux paires de blocs (24, 25) constituent avec les cylindres (6, 7) une cassette (5) amouvible verticalement, démontable en une seule pièce par les deux ouvertures (4), ces ouvertures étant ménagées respectivement dans les parties supérieures des deux montants (1, 2) et débouchant dans les faces horizontales supérieures de ces montants (1, 2), des moyens (28, 29) étant prévus pour limiter le mouvement relatif vers le haut du bloc supérieure (24) sous l'action dudit dispositif d'accouplement élastique (26), par rapport au bloc inférieur (25).

2. Appareil suivant la revendication 1, caractérisé en ce que les blocs coulissants supérieurs (24) et inférieurs (25) ont tous les mêmes dimensions extérieures quel que soit le format des cylindres de coupe (6, 7).

3. Appareil suivant la revendication 2, caractérisé en ce que les blocs coulissants supérieurs (24) et inférieurs (25) ont une même forme parallélépipédique et ils sont engagés étroitement dans les ouvertures (4) des montants (1, 2).

4. Appareil suivant l'une quelconque des revendications précédentes, caractérisé en ce que les cylindres de coupe supérieur (6) et inférieur (7) sont respectivement solidaires de galets de roulement supérieurs (8) et inférieurs (9), fixés aux faces frontales opposées des cylindres de coupe (6, 7), chacun des blocs coulissants supérieurs (24) est prolongé vers l'intérieur de l'appareil, à sa partie supérieure, par une partie en porte-à-faux (24a) s'étendant au-dessus d'un galet de roulement supérieur (8) solidaire du cylindre de coupe supérieur (6), chacun des blocs coulissants inférieurs (25) est prolongé vers l'intérieur de l'appareil, à sa partie inférieure, par une partie en porte-à-faux (25a) qui s'étend en-dessous d'un galet de roulement inférieur (9), solidaire du cylindre de coupe inférieur (7), et au-dessus d'une butée rapportée (31) qui est fixée sur la face interne du montant correspondant (1, 2) et des vérins verticaux de mise en pression (36, 37) sont montés à la partie supérieure de l'appareil pour exercer une pression vers le bas sur les parties en porte-à-faux (24a) des blocs coulissants supérieurs (24).

5. Appareil suivant la revendication 4, caractérisé en ce que chaque butée rapportée (31) est fixée au montant (1, 2) de manière que sa face horizontale supérieure (31a) soit située à un niveau légèrement supérieur à celui où se trouve le bord inférieur (4a) de l'ouverture (4).

6. Appareil suivant l'une quelconque des revendications 4 et 5, caractérisé en ce qu'il comporte, à sa partie supérieure, un cadre de mise en pression (32) articulé dans son ensemble, d'un côté, autour d'un axe transversal, sur les parties supérieures des deux montants (1, 2), ce cadre de mise en pression (32) pouvant être immobilisé en position horizontale par des leviers de blocage (41) montés mobiles sur les parties supérieures des deux montants (1, 2).

7. Appareil suivant la revendication 6, caractérisé en ce que le cadre de mise en pression (32) présente, vu en plan, sensiblement la forme d'un H et il comprend deux branches latérales (33, 34), s'étendant dans le sens longitudinal, lesquelles sont reliées par une traverse centrale (35) portant les deux vérins verticaux (36, 37) de mise en pression, dont les tiges s'étendent vers le bas, les branches latérales (33, 34) du cadre de mise en pression (32) étant montées à pivotement, à l'une de leurs extrémités, sur des chapes respectives (38, 39) montées sur les parties supérieures des deux montants (1, 2).

8. Appareil suivant l'une quelconque des revendications précédentes, caractérisé en ce que les fusées (6a, 7a) des cylindres de coupe supérieur (6) et inférieur (7), qui sont portées par des blocs coulissants (24, 25) logés dans un montant (1) situé d'un côté de l'appareil, sont respectivement solidaires d'engrenages de liaison supérieur (11) et inférieur (12), l'engrenage de liaison inférieur (12) est en prise avec un engrenage (13) faisant partie d'une "tête de cheval" (14), et dont l'arc de débattement, dans un plan vertical longitudinal, est sensiblement aligné avec l'axe de coulissement vertical de la cassette (5), l'engrenage de liaison inférieur (12) et l'engrenage (13) de la "tête de cheval" (14) étant respectivement solidaires de galets de roulement (12a, 13a) venant en contact l'un avec l'autre lorsque les engrenages sont en prise, la "tête de cheval" (14) comprend un levier horizontal (15) portant l'engrenage (13), qui est articulé, à une extrémité, autour d'un arbre transversal de commande générale ou d'entraînement (16) et dont l'autre extrémité est accouplée à l'extrémité supérieure de la tige d'un vérin vertical inférieur (17), l'engrenage de liaison (13) porté par le levier (15) étant également en prise avec un engrenage menant (18) solidaire de l'arbre d'entraînement (16).

## Claims

1. Rotary cutting apparatus comprising a frame supporting, between two parallel and vertical uprights (1, 2), two superimposed cutting cylinders (6, 7), with parallel axes, i.e. an upper cutting cylinder (6) and a lower cutting cylinder (7), two pairs of blocks (24, 25) vertically slidable in two rectangular apertures (4) formed respectively in the two uprights (1, 2), i.e. two opposite upper blocks (24) in which are respectively rotatably mounted two opposite coaxial spindles (6a, 6b) of the upper cutting cylinder (6) and two opposite lower sliding blocks (25) in which are respectively rotatably mounted two opposite coaxial spindles (7a, 7b) of the lower cutting cylinder (7), the upper (24) and lower (25) sliding blocks being connected together by a resilient coupling device (26) tending to lift the upper sliding block (24) with respect to the lower sliding block (25) and authorizing a limited vertical stroke of the upper sliding block (24) with respect to the lower sliding block (25), characterized in that the two pairs of blocks (24, 25) form, together with the cylinders (6, 7), a cassette (5) which is vertically removable and disassemblable as a single unit through the two apertures (4), these apertures being respectively provided in the upper parts of the two uprights (1, 2) and opening in the upper horizontal faces of these uprights (1, 2), means (28, 29) being provided for limiting the upward relative movement of the upper block (24) under action of said resilient coupling device (26), with respect to the lower block (25).

2. Apparatus according to claim 1, characterized in that the upper (24) and lower (25) sliding blocks have all the same outside dimensions whatever the format of the cutting cylinders (6, 7).

3. Apparatus according to claim 2, characterized in that the upper (24) and lower (25) sliding blocks have a same parallelepipedal shape, and are engaged with a tight fit in the apertures (4) of the uprights (1, 2).

4. Apparatus according to any one of the preceding claims, characterized in that the upper (6) and lower (7) cutting cylinders are respectively rigidly connected to upper (8) and lower (9) rolling rollers, fixed to the opposite front faces of the cutting cylinders (6, 7), each one of the upper sliding blocks (24) is extended inwardly in the apparatus, at its upper portion, by an overhanging portion (24a) extending above an upper rolling roller (8) rigidly connected to the upper cutting cylinder (6), each one of the lower sliding blocks (25) extends inwardly in the apparatus, at its lower portion, by an overhanging portion (25a) extending below a lower rolling roller (9), rigidly connected to the lower cutting cylinder (7) and above an added abutement (31) which is fixed onto the internal face of the corresponding upright (1, 2), and vertical pressurizing jacks (36, 37) are mounted at the upper portion on the apparatus in order to exert a downward pressure on the overhanging portions (24a) of the upper sliding blocks (24).

5. Apparatus according to claim 4, characterized in that each added abutment (31) is fixed to the upright (1, 2) so that its upper horizontal face (31a) is situated at a level which is slightly above that where is the lower edge (4a) of the aperture (4).

6. Apparatus according to any one of claims 4 and 5, characterized in that it comprises, in its upper portion, a pressurizing frame (32) articulated, as a whole, on one side, about a transverse axis, on the upper portions of the two uprights (1, 2), this pressurizing frame (32) being securable against motion in a horizontal position by blockage levers (41) movably mounted on the upper portions of the two uprights (1, 2).

7. Apparatus according to claim 6, characterized in that the pressurizing frame (32) has, as seen in a plane view, substantially the shape of an "H", and comprises two lateral branches (33, 34), extending in the longitudinal direction, which are connected by a central cross-beam (35) carrying the two vertical pressurizing jacks (36, 37), the stems of which extend downwardly, the lateral branches (33, 34) of the pressurizing frame (32) being pivotally mounted, at one of their ends, on respective clevisses (38, 39) mounted on the upper portions of the two uprights (1, 2).

8. Apparatus according to any one of the preceding claims, characterized in that the spindles (6a, 7a) of the upper (6) and lower (7) cutting cylinders, which are carried by sliding blocks (24, 25) housed in an upright (1) on one side of the apparatus, are respectively rigidly connected to upper (11) and lower (12) connection gears, the lower connection gear (12) is in mesh with a gear (13) which is part of a "horse head" (14) and the arc of movement of which, in a longitudinal vertical plane, is substantially in alignment with the vertical sliding axis of the cassette (5), the lower connection gear (12) and the gear (13) of the "horse head" (14) being respectively rigidly connected to rolling rollers (12a, 13a) coming in contact with one another when the gears are in mesh, the "horse head" (14) comprises a horizontal lever (15) carrying the gear (13), which is articulated, at one end, about a general control or driving transverse shaft (16) and the other end of which is coupled to the upper end of the stem of a lower vertical jack (17), the connection gear (13) carried by the lever (15) being also in mesh with a driving gear (18) rigidly connected to the driving shaft (16).

## Patentansprüche

1. Rotierende Schneidevorrichtung mit einem Traggerüst, mit zwei Schneidzylindern mit parallelen Achsen zwischen zwei parallelen Ständern (1, 2), nämlich einem oberen Schneidzylinder (6) und einem unteren Schneidzylinder (7), mit zwei Paaren von Blöcken (24, 25), die senkrecht in zwei rechteckigen, jeweils in den beiden Ständern (1, 2) vorgesehenen Öffnungen (4) verschiebbar sind (nämlich zwei gegenüberliegenden oberen Blöcken (24)) in welchen jeweils zwei koaxial, gegenüberliegende Wellen (6a, 6b) des Schneidzylinders (6) drehbar angeordnet sind, und zwei gegenüberliegende untere Führungsblöcke (25) in welchen jeweils zwei koaxiale, gegenüberliegende Wellen (7a, 7b) des unteren Schneidzylinders (7) drehbar angeordnet sind, wobei die oberen Führungsblöcke (24) und die unteren Führungsblöcke (25) miteinander mittels eines elastischen Verbindungselementes (26), welches dazu tendiert, den oberen Führungsblock (24) bezüglich des unteren Führungsblockes (25) anzuheben und eine begrenzte Vertikalbewegung des oberen Führungsblockes (24) bezüglich des unteren Führungsblockes (25) zu gestatten, verbunden sind,
**dadurch gekennzeichnet**,
daß die beiden Blockpaare (24, 25) mit den Zylindern (6, 7) eine vertikal abnehmbare Cassette (5) bilden, die als ein einziges Stück durch die beiden Öffnungen (4) demontierbar ist, daß diese Öffnungen in den jeweils oberen Bereichen der Ständer (1, 2) münden, daß Mittel (28, 29), welche dazu vorgesehen sind, die Relativbewegung des oberen Blocks (24) unter der Aktion des besagten elastischen Verbindungselementes (26) bezüglich des unteren Blockes (25) nach oben zu begrenzen.

2. Vorrichtung nach Anspruch 1, dadurch gekennzeichnet, daß die oberen Führungsblöcke (24) und unteren Führungsblöcke (25) unabhängig vom Format der Schneidzylinder (6, 7) dieselben äußeren Dimensionen aufweisen.

3. Vorrichtung nach Anspruch 2, dadurch gekennzeichnet, daß die oberen Führungsblöcke (24) und unteren Führungsblöcke (25) eine gleiche parallelepipedische Form aufweisen und in den Öffnungen (4) der Ständer (2) eng sitzen.

4. Vorrichtung nach einem der vorangehenden Ansprüche, dadurch gekennzeichnet, daß die oberen Schneidzylinder (6) und die unteren Schneidzylinder (7) mit oberen Drehflanschen (8) und unteren Drehflanschen (9), welche an den gegenüberliegenden Stirnseiten der Schneidzylinder (6, 7) befestigt sind, jeweils versehen sind, daß jeder der oberen Führungsblöcke (24) in Richtung auf das Vorrichtungsinnere in ihrem oberen Bereich durch einen auskragenden Haltebereich, der sich oberhalb einer oberen Drehscheibe (8) erstreckt, die an dem oberen Schneidzylinder (6) vorgesehen ist, verlängert ist, daß jeder der unteren Führungsblöcke (25) in Richtung auf das Vorrichtungsinnere in ihrem unteren Bereich durch einen auskragenden Haltebereich (25a), der sich unterhalb einer unteren Drehscheibe (9) erstreckt, die an dem unteren Schneidzylinder (7) vorgesehen ist, und der sich oberhalb eines Widerlagers (31) erstreckt, verlängert ist, wobei das Widerlager (31) auf einer inneren Fläche des entsprechenden Ständers (1, 2) befestigt ist, und, daß vertikale Druckerzeugungsmittel (36, 37) im oberen Bereich der Vorrichtung vorgesehen sind, um einen Druck nach unten auf die auskragenden Haltebereiche (24a) der oberen Führungsblöcke (24) auszuüben.

5. Vorrichtung nach Anspruch 4, dadurch gekennzeichnet, daß jedes Widerlager (31) an den Ständern (1, 2) in der Weise befestigt ist, daß seine horizontale obere Fläche (31a) auf einem Niveau leicht oberhalb desjenigen Niveaus gelegen ist, auf dem sich der untere Rand (4a) der Öffnung (4) befindet.

6. Vorrichtung nach einem der Ansprüche 4 oder 5, dadurch gekennzeichnet, daß sie in ihrem oberen Bereich einen Druckerzeugungsrahmen (32) aufweist, der als Ganzes in einem Bereich um eine Traversalachse auf den oberen Bereichen der beiden Ständer (1, 2) schwenkbar ist, wobei dieser Druckerzeugungsrahmen (32) mit Hilfe von Blockierriegeln (41), die bewegbar auf den oberen Bereichen der beiden Ständer (1, 2) befestigt sind, in einer horizontalen Position festlegbar sind.

7. Vorrichtung nach Anspruch 6, dadurch gekennzeichnet, daß der Druckerzeugungsrahmen (32), von oben gesehen, die Form etwa eines H aufweist und zwei Seitenarme (33, 34), welche sich in der Längsrichtung erstrecken, und welche mittels einer zentralen Traverse (35), welche die beiden senkrechten Druckerzeugungsmittel (36, 37) trägt, verbunden sind, wobei die Schäfte der Druckerzeugungsmittel sich nach unten erstrecken, daß die Seitenarme (34, 35) des Druckerzeugungsrahmens (32) schwenkbar an einem ihrer Enden jeweils an Kappen (38, 39), welche auf den oberen Bereichen der beiden Ständer (1, 2) montiert sind, angreifen.

8. Vorrichtung nach einem der vorangehenden Ansprüche, dadurch gekennzeichnet, daß die Wellen (6a, 7a) der oberen Schneidzylinder (6) und der unteren Schneidzylinder (7), welche von den Führungsblöcken (24, 25), die in einem Ständer (1) an einer Seite der Vorrichtung untergebracht sind, getragen werden, jeweils mit oberen (11) und unteren (12) Getriebeverbindungen versehen sind, daß das untere Zahnrad (12) der Verbindung im Eingriff mit einem Zahnrad (13) ist, welches Teil eines "Pferdekopfes" (14) ist, und dessen Abstützbogen in einer vertikalen Längsebene mit der senkrechten Führungsrichtung der Cassette (5) fluchtet, daß das untere Zahnrad (12) der Verbindung und das Zahnrad (13) des "Pferdekopfes" (14) jeweils mit Drehscheiben (12a, 13a), welche eines mit dem anderen in Kontakt ist, wenn die Zahnräder im Eingriff sind, versehen sind, daß der "Pferdekopf" (14) einen Horizontalhebel (15), welcher das Zahnrad (13) trägt, aufweist, wobei der Horizontalhebel (15) an einem Ende um eine traversale allgemeine Antriebswelle oder eine Mitnahmewelle (16) schwenkbar ist und sein anderes Ende am oberen Ende des Schaftes einer vertikalen unteren Winde (17) angekoppelt ist, daß das Getriebezahnrad (13) welches von dem Hebel (15) getragen wird, seinerseits im Eingriff mit einem Antriebszahnrad (18), welches an der Mitnahmewelle (16) vorgesehen ist, steht.
